# EUROPÄISCHE PATENTSCHRIFT

(11) **EP 0 863 354 B1**
(45) Veröffentlichungstag und Bekanntmachung des Hinweises auf die Patenterteilung: **19.12.2001**
(21) Anmeldenummer: 98103414.3
(22) Anmeldetag: 27.02.1998
(51) Int. Cl.: F16L 19/12

(54) **Rohrverschraubung mit Schneidring für metallische Rohrleitungen**
Pipe fitting with bite ring for metal pipes
Raccord de tuyau avec une pièce coupante pour tubes métalliques

(30) Priorität: 07.03.1997 DE 19709464
(43) Veröffentlichungstag der Anmeldung: 09.09.1998
(73) Patentinhaber: Armaturenfabrik Hermann Voss GmbH + Co. KG, 51688 Wipperfürth (DE)
(72) Erfinder: Schmidt, Harald Dipl.-Ing., 51688 Wipperfürth (DE); Hester, Hilmar, 51688 Wipperfürth (DE); Kaminski, Volker, 58553 Halver (DE)
(74) Vertreter: Patentanwälte Dr. Solf & Zapf

(56) Entgegenhaltungen:
- WO-A-93/25837
- DE-A- 4 221 175
- DE-A- 4 229 502
- DE-U- 29 604 873
- NL-A- 7 214 823
- US-A- 2 437 632
- US-A- 2 529 552

## Beschreibung

Die vorliegende Erfindung betrifft eine Rohrverschraubung zum Anschluß einer insbesondere metallischen Rohrleitung, mit einem eine Aufnahmeöffnung für die Rohrleitung aufweisenden Anschlußstutzen, einer mit dem Anschlußstutzen verschraubbaren Überwurfmutter sowie einem zwischen dem Anschlußstutzen und der Überwurfmutter angeordneten, metallischen Schneidring, wobei der Schneidring mit einem Außenkonus derart mit einem Innenkonus des Anschlußstutzens zusammenwirkt, daß er beim Anziehen der Überwurfmutter bereichsweise radial nach innen verformt wird und mit mindestens einer Schneidkante unter Kerbwirkung formschlüssig in das Material der Rohrleitung einschneidet, und wobei der Schneidring im Anschluß an den Außenkonus eine im wesentlichen radiale Anschlagfläche zur anzugsbegrenzenden Anlage an einer Stirnfläche des Anschlußstutzens aufweist, und wobei in einer Ringnut im Bereich des Außenkonus des Schneidrings eine elastomere Umfangsdichtung zur Anlage in dem Innenkonus des Anschlußstutzens angeordnet ist.

Eine derartige Rohrverschraubung ist aus der WO-A-93/25837, Figuren 3 und 4, bekannt. Dabei soll ein elastomeres Dichtelement etwa mittig innerhalb des konischen Anlagebereichs zwischen Außen- und Innenkonus angeordnet sein. Das Dichtelement soll dicker als die Tiefe der Ringnut sein, so daß das Dichtelement vor der Schneidring-Montage auf beiden Seiten aus der Ringnut radial vorsteht, was bei der Montage zu einem Wegfließen des Dichtungsmaterials führen könnte. Dadurch wäre die Dichtwirkung zumindest beeinträchtigt.

Es sind weitere Rohrverschraubungen mit metallischer Abdichtung zum Teil in Kombination mit elastischen Dichtelementen bekannt.

So beschreibt beispielsweise die DE 43 04 534 A1 ein solches "Verbindungssystem", wobei ausschließlich eine metallische Abdichtung über zwei in das Rohr einschneidende Schneidkanten vorgesehen ist. Diese Druckschrift beschäftigt sich in erster Linie mit der Verbesserung der mechanischen Halterung der Rohrleitung, wozu der Schneidring aus einem durchgehärteten bzw. durchgehend verfestigten Material bestehen soll. Fakultativ kann dabei der Schneidring zumindest bereichsweise eine die Reibung vermindernde - und somit die Gleiteigenschaften verbessernde - Beschichtung aufweisen, die insbesondere PTFE enthalten kann.

Eine ähnliche Rohrverschraubung offenbart auch die FR-A-2 568 665. Dabei ist - zusätzlich zu der metallischen Abdichtung - ein Dichtring vorgesehen, der axial vor dem Schneidring im Spalt zwischen der Rohrleitung und dem Stutzen-Innenkonus angeordnet ist. Hierbei kann es unter bestimmten Umständen zu einem "Wegfließen" des Dichtungsmaterials vor allem in den Spalt zwischen Stutzen und Rohr kommen. Dies ist natürlich ungünstig für die Dichtwirkung.

Entsprechendes beschreibt auch die DE 44 26 445 C2. Zudem ist bei dieser bekannten Rohrverschraubung vorgesehen, daß zwischen dem Außenkonus des

Schneidrings und dessen Anschlagfläche eine Freifläche derart gebildet ist, daß in der Montagestellung zwischen der Freifläche und dem Stutzenlnnenkonus ein Freiraum gegeben ist. Dadurch sollen radiale Spannungsspitzen am stirnseitigen Ende des Anschlußstutzens vermieden werden.

In der DE 40 41 677 ist eine insofern nicht gattungsgemäße Rohrverschraubung beschrieben, als eine sogenannte Übermontage nicht durch eine Anzugsbegrenzung vermieden werden kann, weil der Schneidring keine radiale Anschlagfläche aufweist Allerdings sind bereits verschiedene Ausführungsformen einer zusätzlichen Dichtungsanordnung mit mindestens einer aus einem elastomeren Material bestehenden Umfangsdichtung beschrieben. Dabei wird überwiegend nur der Spalt unmittelbar zwischen der Rohrleitung und der Innenfläche des Anschlußstutzens abgedichtet. In einigen Ausführungen ist die Dichtung praktisch in zwei Dichtelemente aufgeteilt, wobei entweder der Schneidring gegen die Rohrleitung und gegen den Anschlußstutzen abgedichtet ist, oder die Überwurfmutter ist direkt gegen den Anschlußstutzen und gegen die Rohrleitung abgedichtet.

Der vorliegenden Erfindung liegt die Aufgabe zugrunde, eine Rohrverschraubung der gattungsgemäßen Art vor allem bezüglich der Dichtwirkung weiter zu verbessern.

Erfindungsgemäß wird dies dadurch erreicht, daß die elastomere Umfangsdichtung im Übergangsbereich zwischen dem Außenkonus und der Anschlagfläche des Schneidrings angeordnet ist, wozu die die Umfangsdichtung aufnehmende Ringnut zwischen dem Außenkonus und der Anschlagfläche gebildet ist und unmittelbar in die Anschlagfläche übergeht, so daß in der Montagestellung die Umfangsdichtung zwischen dem Schneidring einerseits und zumindest einem sich direkt an die Stirnfläche anschließenden Teilbereich des Innenkonus des Anschlußstutzens andererseits unter elastischer Vorspannung angeordnet ist.

Hierbei ist von besonderem Vorteil, daß in diesem Übergangsbereich eine gute Kammerung der Umfangsdichtung gewährleistet werden kann, so daß ein "Wegfließen" von Dichtungsmaterial weitgehend vermieden wird. Dazu ist es vorteilhaft, daß die die Umfangsdichtung aufnehmende Ringnut unmittelbar in die Anschlagfläche übergeht, was bedeutet, daß die auf beiden Axialseiten von im wesentlichen radialen Flankenflächen begrenzte Ringnut über die eine Flankenfläche direkt in die Anschlagfläche übergeht, so daß praktisch diese Nutflankenfläche und die Anschlagfläche in einer gemeinsamen Ebene liegen.

Vorzugsweise ist die Umfangsdichtung entweder nur im Konusbereich mit hauptsächlich radialer Dichtwirkung oder aber in Kombination sowohl im Konusbereich als auch zwischen der Anschlagfläche und der Stutzen-Stimfläche mit radialer sowie axialer Dichtwirkung angeordnet. Im letzten Fall kommt somit die Anschlagfläche des Schneidrings mittelbar über einen Abschnitt der Umfangsdichtung zur Anlage an die Stimfläche des Anschlußstutzens.

Um eine besonders gute und sichere Abdichtung auch gegen hohe System-Innendrücke zu erreichen, ist es vorteilhaft, wenn die die Umfangsdichtung aufnehmende Ringnut einen Nutgrund aufweist, der bezüglich seines Durchmessers zumindest bereichsweise derart kleiner als der größte Durchmesser am stirnseitigen Ende des Innenkonus des Anschlußstutzens ist, daß in einer dadurch zum Innenkonus hin gebildeten Kammer eine Umfangsdichtung untergebracht werden kann, die ein für eine Dichtungsverpressung hinreichend großes Volumen aufweist. Dies kann zudem auch durch eine bestimmte Ausgestaltung der Umfangskontur der Ringnut bzw. des Nutgrundes beeinflußt werden, wozu nachfolgend noch einige Ausführungsvarianten genauer beschrieben werden. Mit der Kontur der Ringnut kann im übrigen auch das Verformungsverhalten des Schneidrings beim Anziehen der Verschraubung günstig beeinflußt werden.

Weitere vorteilhafte Ausgestaltungsmerkmale der Erfindung sind in den Unteransprüchen sowie der folgenden Beschreibung enthalten.

Anhand von mehreren in der Zeichnung dargestellten, bevorzugten Ausführungsbeispielen soll im folgenden die Erfindung näher erläutert werden. Dabei zeigen:
- Fig. 1: einen Längsschnitt durch eine erfindungsgemäße Rohrverschraubung in einer ersten Ausführungsform, wobei in der oberen Figurenhälfte ein Zustand vor dem Anziehen der Überwurfmutter dargestellt ist, während die untere Figurenhälfte die angezogene Montagestellung zeigt,
- Fig. 2: einen Axialschnitt des Schneidrings der Ausführung nach Fig. 1 in einem Zustand vor der ersten montagebedingten Verformung,
- Fig. 3: eine erfindungsgemäße elastomere Umfangsdichtung im Axialschnitt in einer ersten Ausführungsform,
- Fig. 3a: eine zweite Ausführungsform der Umfangsdichtung in einer Darstellung entsprechend Fig. 3,
- Fig. 4: eine stark vergrößerte Darstellung des Teilbereichs IV gemäß Fig. 2 mit der Ausführungsform der Umfangsdichtung nach Fig. 3,
- Fig. 4a: eine Darstellung entsprechend Fig. 4, jedoch mit der Alternative der Umfangsdichtung nach Fig. 3a,
- Fig. 5: eine zweite Ausführungsform der erfindungsgemäßen Rohrverschraubung in der Fig. 1 entsprechenden Darstellungen, d.h. obere Figurenhälfte vor der ersten Montage und untere Hälfte angezogene Montagestellung,
- Fig. 6: im Axialschnitt einen Schneidring gemäß Fig. 5,
- Fig. 7: eine Umfangsdichtung nach Fig. 5 im Axialschnitt,
- Fig. 8: einen Halb-Axialschnitt einer dritten Ausführungsform der erfindungsgemäßen Rohrverschraubung in einem Zustand nach einer Vormontage des Schneidrings und erstem Handanzug der Überwurfmutter,
- Fig. 9: die Rohrverschraubung nach Fig. 8 nach Endmontage (angezogene Montagestellung),
- Fig. 10: eine vergrößerte Darstellung des Bereichs X des Schneidrings nach Fig. 8,
- Fig. 11: einen Halb-Längsschnitt einer weiteren Ausführungsvariante der erfindungsgemäßen Rohrverschraubung,
- Fig. 12: eine Teilansicht aus Fig. 11 des Bereichs des auf der Rohrleitung montierten Schneidrings und
- Fig. 13: eine Teil-Stirnansicht in Pfeilrichtung XIII gemäß Fig. 12.

In den verschiedenen Figuren der Zeichnung sind gleiche Teile stets mit den gleichen Bezugszeichen versehen und werden daher in der Regel jeweils nur einmal beschrieben.

Eine erfindungsgemäße Rohrverschraubung 1 besteht generell, d.h. bei allen dargestellten Ausführungsbeispielen, aus einem jeweils nur angedeuteten Grundkörper 2, der mindestens einen ein Außengewinde aufweisenden Anschlußstutzen 4 aufweist, auf den eine Überwurfmutter 6 aufgeschraubt bzw. aufschraubbar ist. Der Anschlußstutzen 4 besitzt eine Aufnahmeöffnung 8 für ein Ende 10a einer - insbesondere aus Stahl oder einem anderen Metall bestehenden - Rohrleitung 10. Die Aufnahmeöffnung 8 ist zweckmäßig durch eine Bohrung gebildet, die über eine radiale Ringstufe 12 in einen im Durchmesser reduzierten, sich weiter in den Grundkörper 2 erstreckenden und mit dem Innendurchmesser der Rohrleitung 10 vorzugsweise etwa fluchtenden Kanal 14 übergeht. Dabei bildet die Ringstufe 12 einen Anschlag für das Ende 10a der Rohrleitung 10.

Zwischen dem Anschlußstutzen 4 und einem radial nach innen weisenden Ringbund 16 der Überwurfmutter 6 ist ein die Rohrleitung 10 umschließender, metallischer Schneidring 18 angeordnet. Der Ringbund 16 besitzt bzw. umschließt eine Durchführöffnung 20 für die Rohrleitung 10. Der Schneidring 18 besteht aus einem im Zwischenraum zwischen dem Anschlußstutzen 4 und der Überwurfmutter 6 bzw. dem Ringbund 16 angeordneten Basisringteil 24 und einem sich von diesem in Richtung des Anschlußstutzens 4 erstreckenden, in der Ringstärke reduzierten, rohrstückartigen Schneidringteil 26. Die Aufnahmeöffnung 8 des Anschlußstutzens 4 erweitert sich in ihrem der Überwurfmutter 6 zugekehrten Endbereich über einen Innenkonus 28. In diesen Innenkonus 28 greift der Schneidring 18 mit dem Schneidringteil 26 ein und wirkt hierbei mit einem sich verjüngenden Außenkonus 30 mit dem Innenkonus 28 derart zusammen, daß durch axiales Verspannen beim Anziehen der Überwurfmutter 6 der Schneidring 18 im Bereich des Schneidringteils 26 radial nach innen verformt (gestaucht) wird und dadurch mit vorzugsweise zwei axial beabstandeten, radial nach innen weisenden, ringförmigen Schneidkanten 32 unter Kerbwirkung insbesondere formschlüssig in das Material der Rohrleitung 10 eindringt.

Vorzugsweise besitzt auch der Basisringteil 24 auf seiner dem Schneidringteil 26 axial abgekehrten Seite eine sich endseitig konisch verjüngende Außenkonusfläche 34, die an einer entsprechenden Innenkonusfläche 36 des Ringbundes 16 der Überwurfmutter 6 anliegt. Hierdurch wird auch in diesem Bereich eine Keilwirkung zum radialen Verpressen des Schneidrings 18 sowie auch eine Selbstzentrierung erreicht.

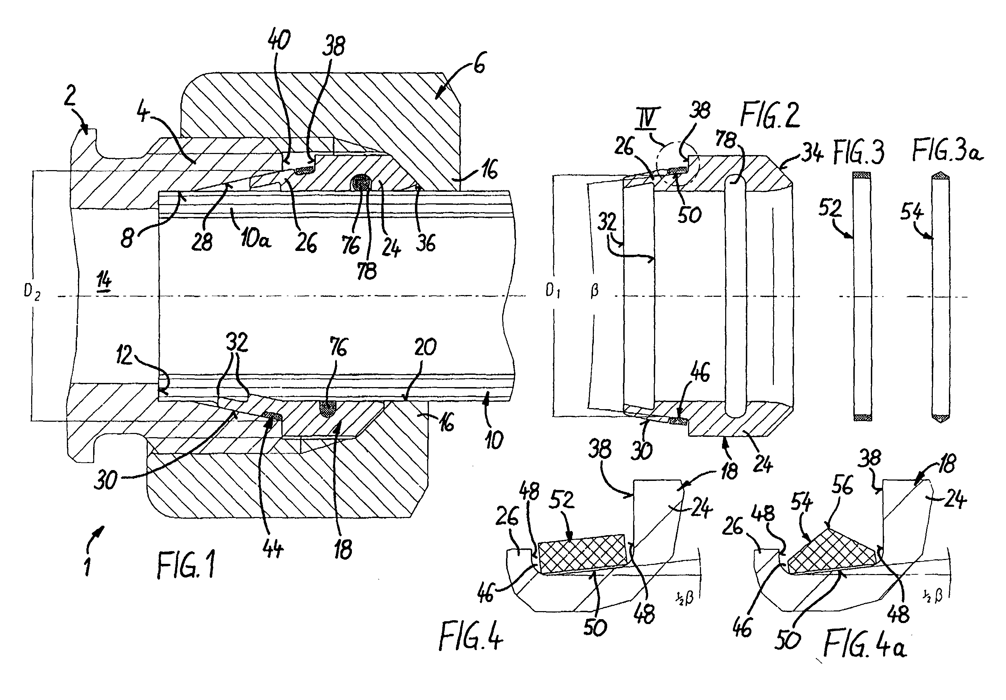

Der Schneidring 18 bzw. der Basisringteil 24 weist auf seiner dem Schneidringteil 26 zugekehrten Seite eine im wesentlichen radiale Anschlagfläche 38 auf, die in einer angezogenen Montagestellung (vgl. jeweils die untere Figurenhälfte in Fig. 1 und 5 sowie die Fig. 9) zur anzugsbegrenzenden Stellung an eine Stirnfläche 40 des Anschlußstutzens 4 gelangt.

Der Schneidring 18 dient einerseits der mechanischen Halterung der Rohrleitung 10 durch eine über die Schneidkanten 32 erreichte Formschlußverbindung. Andererseits hat der Schneidring 18 grundsätzlich auch eine metallische Dichtfunktion über die in die Rohrleitung 10 einschneidenden Schneidkanten 32 und über die Konen 28, 30.

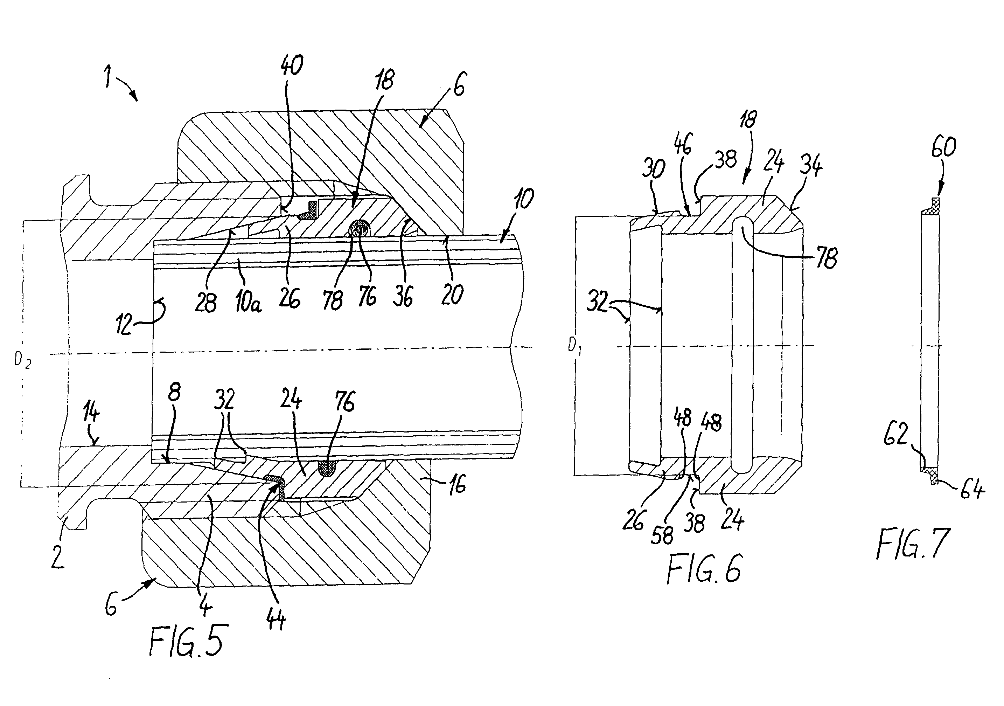

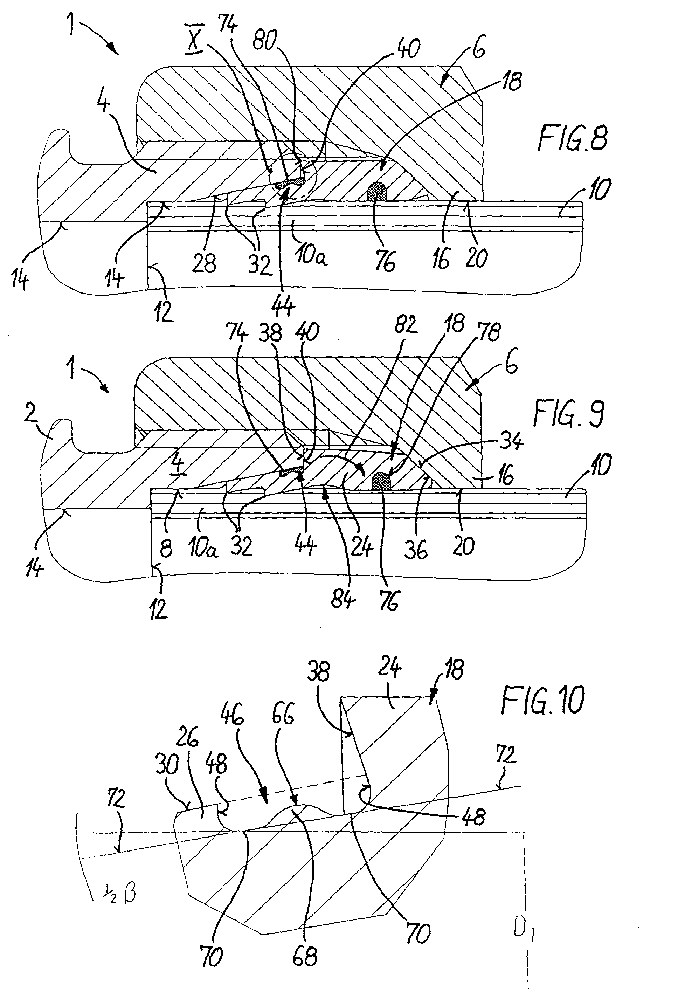

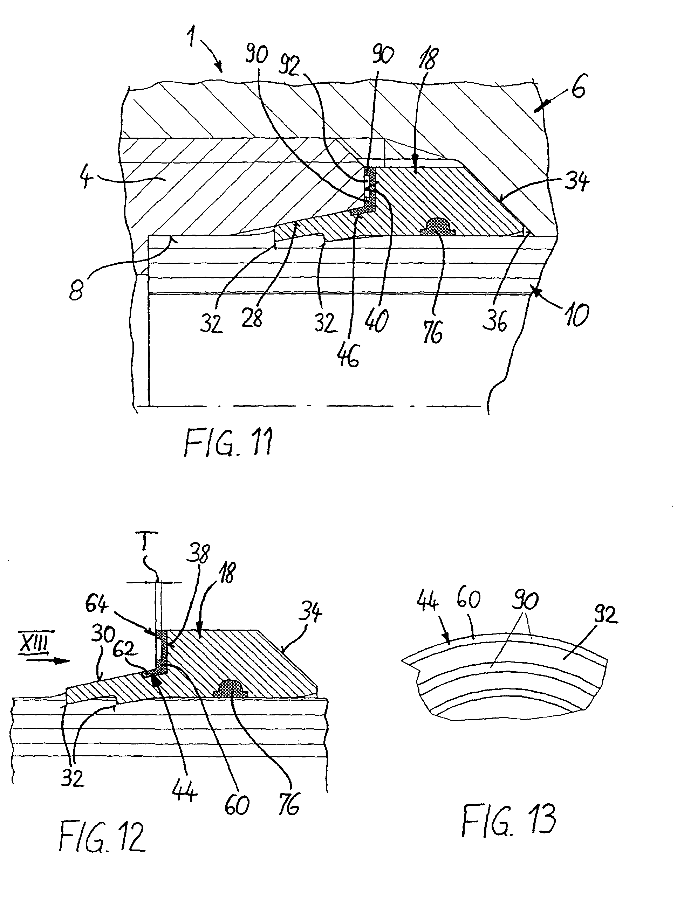

Erfindungsgemäß weist nun der Schneidring 18 im Übergangsbereich zwischen dem Außenkonus 30 und der Anschlagfläche 38 eine elastomere Umfangsdichtung 44 auf, und zwar derart, daß in der Montagestellung die Umfangsdichtung 44 zwischen dem Schneidring 18 einerseits und dem Innenkonus 28 und/ oder der Stirnfläche 40 des Anschlußstutzens 4 andererseits unter elastischer Vorspannung gekammert angeordnet ist. In den Ausführungsformen nach Fig. 1 bis 4 bzw. 4a einerseits und nach Fig. 8 bis 10 andererseits wird die Umfangsdichtung 44 im wesentlichen nur im Bereich der aneinanderliegenden Konen, d.h. des Außenkonus 30 und des Innenkonus 28, gekammert, so daß hierbei die Anschlagfläche 38 unmittelbar zur Anlage an die Stirnfläche 40 gelangt. In der Ausführung nach Fig. 5 bis 7 - sowie auch in der Ausgestaltung nach Fig. 11 bis 13 - wird die Umfangsdichtung 44 zusätzlich auch axial zwischen der Anschlagfläche 38 und der Stirnfläche 40 gekammert, so daß hierbei die Anschlagfläche 38 mittelbar über die Umfangsdichtung 44 an der Stirnfläche 40 anliegt.

Die erfindungsgemäße Umfangsdichtung 44 ist zweckmäßigerweise in einer zwischen dem Außenkonus 30 und der Anschlagfläche 38 gebildeten Ringnut 46 des Schneidrings 18 angeordnet. Vorzugsweise geht diese Ringnut 46 unmittelbar in die Anschlagfläche 38 über. Dies bedeutet, daß die Ringnut 46 auf den beiden axialen Seiten von im wesentlichen radialen Flankenflächen 48 begrenzt wird, wobei die dem Außenkonus 30 axial abgekehrte Flankenfläche 48 im wesentlichen in der gleichen Ebene mit der Anschlagfläche 38 liegt.

Bei der Ausführungsform nach den Fig. 1 bis 4a ist nun speziell vorgesehen, daß die Ringnut 46 einen Nutgrund 50 aufweist, der - im Axialschnitt gesehen - mit einem bestimmten Konuswinkel β (s. Fig. 2) konisch ausgebildet ist. In den vergrößerten Darstellungen in Fig. 4 und 4a ist jeweils der halbe Konuswinkel ½β eingezeichnet. Der konische Nutgrund 50 weist insbesondere auf seiner dem Außenkonus 30 axial zugekehrten Seite einen kleinsten Durchmesser D₁ auf (s. Fig. 2), der - schon vor der ersten montagebedingten Verformung des Schneidrings 18 - jedenfalls kleiner als der größte Durchmesser D₂ (s. Fig. 1) am stirnseitigen Ende des Innenkonus 28 des Anschlußstutzens 4 ist. Bei den gängigen Normgrößen der Rohrverschraubung 1 (gemäß DIN 3861) liegt der Durchmesser D₁ des Nutgrundes 50 im Nennmaß etwa 0,4 bis 0,5 mm unter dem Durchmesser D₂ am Ende des Innenkonus 28. Beträgt nach der genannten DIN der größte Durchmesser D₂ des Innenkonus 28 beispielsweise 14,3 mm, so hat der Nutgrund einen Durchmesser D₁ von insbesondere etwa 13,9 mm. Der Konuswinkel β liegt bevorzugt im Bereich von etwa 10° bis 15° und beträgt insbesondere etwa 12°, d.h. 2 x ca. 6° (½β) zur Längsachse.

In Verbindung mit dieser beschriebenen Kontur der Ringnut 46 kann für die Umfangsdichtung 44 mit Vorteil ein Profilring 52 nach Fig. 3 und 4 verwendet werden. Dieser Profilring 52 weist einen im wesentlichen rechteckigen Ringquerschnitt auf, wobei er vor der Montage, d.h. vor dem Einsetzen in die Ringnut 46, eine im wesentlichen hohlzylindrische, schlauchartige Form aufweist. Nach Einsetzen in die Ringnut 46 erfolgt eine Anpassung an die konische Form des Nutgrundes 50; s. Fig. 1 und 2. Alternativ dazu kann gemäß Fig. 3a und 4a auch ein Profilring 54 mit einem im wesentlichen dreieckigen Ringquerschnitt verwendet werden. Wie sich vor allem aus der vergrößerten Darstellung in Fig. 4a ergibt, besitzt dieser Profilring 54 bevorzugt im radial inneren Ringbereich einen etwa im Querschnitt rechteckigen Basisringteil mit einem sich radial außen anschließenden, insbesondere gleichschenkligen Dreieckbereich. Hierdurch ergibt sich eine radial nach außen ragende Dichtkante 56, die durch eine Ecke des Dreieckquerschnitts gebildet wird. Bei der Montage wird der Profilring 54 im Bereich der Dichtkante 56 verpreßt, so daß der Profilring 54 die Ringnut 46 dann im wesentlichen ausfüllt (entsprechend der Darstellung in der unteren Figurenhälfte der Fig. 1). Auch hierbei weist der Profilring 54 vor der Montage gemäß Fig. 3a eine im wesentlichen zylindrische Innenfläche auf, die sich dann im montierten Zustand an den konischen Nutgrund 50 anpaßt.

Bei der Ausführungsform nach Fig. 5 bis 7 weist die Ringnut 46 demgegenüber einen Nutgrund 58 auf, 1 der im Axialschnitt im wesentlichen zylindrisch ausgebildet ist. Das Verhältnis des Durchmessers D₁ dieses zylindrischen Nutgrundes 58 zu dem größten Durchmesser D₂ des Stutzen-Innenkonus 28 entspricht der Ausführung nach Fig. 1 bis 4a. Bei dieser Ausführung wird aber beispielhaft als Umfangsdichtung 44 ein Profilring 60 verwendet, der gemäß Fig. 5 und 7 einen im wesentlichen L-förmigen Ringquerschnitt mit einem axialen, insbesondere dem Außenkonus 30 zugekehrten Ringabschnitt 62 und einem sich radial nach außen erstreckenden Ringabschnitt 64 aufweist. Diese Abschnitte 62, 64 sind größenmäßig derart ausgelegt, daß nach der Montage - siehe Fig. 5, untere Hälfte - der radiale Ringabschnitt 64 zwischen der Anschlagfläche 38 des Schneidrings 18 und der Stirnfläche 40 des Anschlußstutzens 4 angeordnet ist.

Was nun die Ausführungsform nach Fig. 8 bis 10 betrifft, so weist hierbei die Ringnut 44 einen Nutgrund 66 auf, der im Axialschnitt gesehen - in einem etwa mittigen Bereich 68 konvex gewölbt sowie vorzugsweise in beiden Flankenbereichen 70 konkav gewölbt ist (s. hierzu insbesondere Fig.10). Die Wölbungen gehen zweckmäßigerweise stetig ineinander über. Durch diese Kontur der Ringnut 46 wird eine gute Dichtungsverpressung erreicht. Zudem ist diese Kontur auch verformungsgünstig, was die Verformung des Schneidrings beim Anziehen der Verschraubung betrifft.

Wie sich ferner aus Fig. 10 ergibt, ist bei dem dargestellten Ausführungsbeispiel bevorzugt vorgesehen, daß die beiden konkav gewölbten Flankenbereiche 70 der Ringnut 46 eine fiktive Umfangsebene 72 definieren, die - im wesentlichen analog zur Ausführung nach Fig. 1 bis 4a - im Axialschnitt mit einem bestimmten Konuswinkel β (in Fig. 10 ist der halbe Konuswinkel ½β eingezeichnet) konisch ausgebildet ist. Dabei ist vorzugsweise vorgesehen, daß aufgrund des Konuswinkels β der dem Außenkonus 30 axial nächstliegende Flankenbereich 70 im Durchmesser kleiner als der andere Flankenbereich 70 ist. Dies könnte grundsätzlich aber auch umgekehrt vorgesehen sein. Jedenfalls ist auch hier wiederum der kleinere Durchmesser D₁ jedenfalls kleiner als der größte Durchmesser D₂ des Stutzen-Innenkonus 28. Die Größe des Konuswinkels β entspricht bevorzugt der Ausführung nach Fig. 1 bis 4a.

Alternativ dazu kann in einer nicht dargestellten Ausführungsform auch vorgesehen sein, daß die beiden Flankenbereiche 70 der Ringnut 46 eine fiktive zylindrische Umfangsebene definieren, die dann wiederum einen Durchmesser - entsprechend (D₁) aufweist, der kleiner als der größte Durchmesser (D₂) des Innenkonus 28 ist.

Bei der Ausführungsform nach Fig. 8 bis 10 kann als Umfangsdichtung 44 ein Profilring 74 verwendet werden, dessen Ringquerschnittskontur derart gewählt wird, daß der Profilring 74 in der Montagestellung (Fig. 9) die sich durch die Ringnut 46 und den Innenkonus 28 ergebende Kammer ausfüllt, dabei aber elastisch komprimiert ist und daher unter Vorspannung steht.

In allen dargestellten Ausführungsformen besteht die Umfangsdichtung 44 bzw. der jeweilige Profilring 52, 54, 60 bzw. 74 aus einem geeigneten elastomeren Material. Besonders geeignet ist ein Material unter Verwendung von NBR (Nitrilkautschuk nach DIN ISO 1629) und/oder PTFE (Polytetrafluorethylen nach DIN 7728 T1). Ein vielfach für Dichtungen verwendetes Material ist zudem auch VITON (Marke der Firma DuPont); dabei handelt es sich um wärme- und chemikalienbeständige, vulkanisierbare Fluorelastomere auf der Basis von Vinylidenfluorid-Hexafluorpropylen-copolymerisaten.

Es ist weiterhin in allen Ausführungsformen zweckmäßigerweise ein zusätzlicher elastischer Dichtring 76 zur radial inneren Abdichtung zwischen dem Schneidring 18 und der Rohrleitung 10 vorgesehen. Dieser zusätzliche Dichtring 76 ist zweckmäßig in einer inneren Ringnut 78 des Schneidrings 18 angeordnet, und zwar insbesondere etwa im mittigen Bereich des Basisringteils 24 oder aber geringfügig von der Mitte in Richtung des Ringbundes 16 der Überwurfmutter 6 versetzt (vgl. Fig. 8 und 9).

Der zusätzliche Dichtring 76 wird einerseits beim Anziehen durch die Wirkung der Konusflächen 34 und 36 radial nach innen verspannt. Andererseits kann auch - wie beim Ausführungsbeispiel nach Fig. 8 bis 10 veranschaulicht ist - vorgesehen sein, daß die Anschlagfläche 38 des Schneidrings 18 zumindest vor der ersten Montage derart geringfügig radial nach außen sowie axial in Richtung der Stirnfläche 40 des Anschlußstutzens 4 geneigt, also leicht hohl-konisch, verläuft, daß beim Anziehen der Überwurfmutter 6 eine Verformung des Schneidrings 18 zum Zwecke einer bereichsweisen, radial nach innen gerichteten Verpressung gegen die Rohrleitung 10 erfolgt, und zwar insbesondere im Bereich des zusätzlichen Dichtrings 76. Der geneigte, leicht konische Verlauf der Anschlagfläche 38 ist in Fig. 10 etwas übertrieben dargestellt. Bei der Montage gelangt der Schneidring 18 gemäß Fig. 8 zunächst mit einer äußeren Ringkante 80 der Anschlagfläche 38 zur Anlage an die Stirnfläche 40 des Stutzens 4. In Fig. 9 ist veranschaulicht, daß in der angezogenen Montagestellung die Anschlagfläche 38 dann im wesentlichen vollflächig an der Stirnfläche 40 anliegt, nachdem sich der Schneidring entsprechend dem eingezeichneten Pfeil 82 verformt hat. Durch diese Verformung ergibt sich im etwa mittigen Bereich des Schneidrings, d.h. etwa im Übergang zwischen dem Schneidringteil 26 und dem Basisringteil 24, eine geringfügige radiale Aufwölbung 84.

Im Bereich des Dichtrings 76 wird der Schneidring bogenförmig radial auf die Rohrleitung 10 gepreßt. Der Dichtring 76 erhält dadurch eine effektive spielfreie Verspannung auf dem Umfang der Rohrleitung 10.

Speziell bei der Ausführung nach Fig. 8 bis 10 läuft der Montagevorgang folgendermaßen ab. Wenn - beispielsweise nach einem Handanzug - die Ringkante 80 zur Anlage gelangt (Fig. 8), befindet sich die Umfangsdichtung 44 zu etwa 2/3 ihrer axialen Länge innerhalb des Innenkonus 28. Axial zwischen der Anschlagfläche 38 und der Stirnfläche 40 ist noch eine geringfügiger, sich radial nach außen verengender Spalt vorhanden. Der zusätzliche Dichtring 76 liegt auf dem Umfang der Rohrleitung 10 an, jedoch noch ohne zusätzliche Verpressung durch die Verformung des Schneidrings 18. Ausgehend von dieser Stellung wird dann die Überwurfmutter mit etwa 1,25 bis 1,5 Umdrehungen angezogen. Dadurch erreicht die Verschraubung die Montagestellung gemäß Fig. 9. Die etwa bogenförmige Verformung der zuvor konischen Anschlagfläche 38 des Schneidrings 18 bewirkt unter zunehmendem Anpreßdruck mittels der Überwurfmutter 6 eine spaltfreie und sichere Anlage an der Stutzen-Stirnfläche 40 und zudem eine einwandfreie Kammerung der Umfangsdichtung 44. Aufgrund der besonderen Ausgestaltung des Bereichs der Ringnut 46 tritt dabei auch eine Veränderung, insbesondere Verringerung des Nutvolumens auf, so daß die Umfangsdichtung 44 fest gegen den Stutzen-Innenkonus 28 verpreßt wird.

Nach einem Lösen der Überwurfmutter 6 entspannt sich der leicht elastisch federnde Schneidring 18, so daß die Umfangsdichtung 44 vorteilhafterweise bei Bedarf austauschbar ist.

Im Falle einer erneuten Montage wird der Anzug der Überwurfmutter 6 vorteilhafterweise durch den auf Block anschlagenden Schneidring 18 spürbar begrenzt.

Was nun schießlich die Ausführung nach Fig. 11 bis 13 betrifft, so handelt es sich dabei insofern speziell um eine Weiterbildung des Ausführungsbeispiels nach Fig. 5 bis 7, als der radiale Ringabschnitt 64 auf seiner axial in Richtung des Anschlußstutzens 4 weisenden Anlageseite mindestens eine, vorzugsweise aber mindestens zwei konzentrisch umlaufende, ringstegartige Anlagerippen 90 aufweist. Diese ergeben sich durch eine radial dazwischenliegende, axiale, nutartige Ringvertiefung 92. Diese Ringvertiefung 92 besitzt eine axiale Tiefe T (Fig. 12). Aufgrund der Elastizität des Materials der Dichtung 44 kann somit ein Anzug der Verschraubung - statt bis zu einer genau definierten Anschlagstellung - über einen etwa der Tiefe T entsprechenden Anzugsbereich hinweg erfolgen; es wird praktisch eine "Anzugsreserve" zum Ausgleich einer eventuellen ungünstigen Toleranzlage der Einzelteile erreicht. Dies bedeutet, daß ausgehend von der in Fig. 11 dargestellten Stellung, in der die Anlagerippen 90 gerade an der Stutzen-Stimfläche 40 zur Anlage gelangt sind, im Bedarfsfall ein noch weitergehender Anzug etwa über den Bereich der Tiefe T hinweg möglich ist. Durch ihren kreisförmigen Umfangsverlauf tragen die Anlagerippen 90 zu einer noch weiter verbesserten Dichtwirkung bei. Mit anderen Worten wird durch die Elastizität der Anlagerippen 90 auch ein in der korrekt angezogenen Montagestellung eventuell noch vorhandenes, z.B. toleranzbedingtes Axialspiel zwischen Stutzen 4 und Anschlagfläche 38 ausgeglichen. Der Profilring 60 kann stoffschlüssig mit dem Schneidring 18 verbunden, z.B. anvulkanisiert oder angespritzt sein.

## Patentansprüche

1. Rohrverschraubung (1) zum Anschluß einer insbesondere metallischen Rohrleitung (10), mit einem eine Aufnahmeöffnung (8) für die Rohrieitung (10) aufweisenden Anschlußstutzen (4), einer mit dem Anschlußstutzen (4) verschraubbaren Überwurfmutter (6) sowie einem zwischen dem Anschlußstutzen (4) und der Überwurfmutter (6) angeordneten, metallischen Schneidring (18), wobei der Schneidring (18) mit einem Außenkonus (30) derart mit einem Innenkonus (28) des Anschlußstutzens (4) zusammenwirkt, daß er beim Anziehen der Überwurfmutter (6) bereichsweise radial nach innen verformt wird und mit mindestens einer Schneidkante (32) unter Kerbwirkung formschlüssig in das Material der Rohrleitung (10) einschneidet, und wobei der Schneidring (18) im Anschluß an den Außenkonus (30) eine im wesentlichen radiale Anschlagfläche (38) zur anzugsbegrenzenden Anlage an einer Stirnfläche (40) des Anschlußstutzens (4) aufweist, und wobei in einer Ringnut (46) im Bereich des Außenkonus (30) des Schneidrings (18) eine elastomere Umfangsdichtung (44) zur Anlage in dem Innenkonus (28) des Anschlußstutzens (4) angeordnet ist,
**dadurch gekennzeichnet, daß** die elastomere Umfangsdichtung (44) im Übergangsbereich zwischen dem Außenkonus (30) und der Anschlagfläche (38) des Schneidrings (18) angeordnet ist, wozu die die Umfangsdichtung (44) aufnehmende Ringnut (46) zwischen dem Außenkonus (30) und der Anschlagfläche (38) gebildet ist und unmittelbar in die Anschlagfläche (38) übergeht, so daß in der Montagestellung die Umfangsdichtung (44) zwischen dem Schneidring (18) einerseits und zumindest einem sich direkt an die Stirnfläche (40) anschließenden Teilbereich des Innenkonus (28) des Anschlußstutzens (4) andererseits unter elastischer Vorspannung angeordnet ist.

2. Rohrverschraubung nach Anspruch 1,
**dadurch gekennzeichnet, daß** die Ringnut (46) einen Nutgrund (58) aufweist, der im Axialschnitt im wesentlichen zylindrisch ausgebildet ist und einen Durchmessser (D₁) aufweist, der kleiner als der größte Durchmesser (D₂) am stirnseitigen Ende des Innenkonus (28) des Anschfußstutzens (4) ist.

3. Rohrverschraubung nach Anspruch 1,
**dadurch gekennzeichnet**, daßdieRingnut(46)einenNutgrund (50) aufweist, der im Axialschnitt mit einem bestimmten Konuswinkel (β) konisch ausgebildet ist und - insbesondere auf seiner dem Außenkonus (30) axial zugekehrten Seite - einen kleinsten Durchmesser (D₁) aufweist, der kleiner als der größte Durchmesser (D₂) am stirnseitigen Ende des Innenkonus (28) des Anschlußstutzens (4) ist.

4. Rohrverschraubung nach Anspruch 1,
**dadurch gekennzeichnet**, daßdieRingnut(44)einenNutgrund (66) aufweist, der - im Axialschnitt gesehen - in einem etwa mittigen Bereich (68) konvex gewölbt sowie vorzugsweise in beiden Flankenbereichen (70) konkav gewölbt ist.

5. Rohrverschraubung nach Anspruch 4,
**dadurch gekennzeichnet, daß** die beiden konkav gewölbten Flankenbereiche (70) der Ringnut (46) eine fiktive, zylindrische Umfangsebene definieren, die einen Durchmesser (D₁) aufweist, der kleiner als der größte Durchmesser (D₂) am stimseitigen Ende des Innenkonus (28) des Anschlußstutzens (4) ist.

6. Rohrverschraubung nach Anspruch 4,
**dadurch gekennzeichnet, daß** die beiden konkav gewölbten Flankenbereiche (70) der Ringnut (46) eine fiktive Umfangsebene (72) definieren, die im Axialschnitt mit einem bestimmten Konuswinkel (β) konisch ausgebildet ist, wobei der kleinere Durchmesser insbesondere des dem Außenkonus (30) axial nächstliegenden konkaven Flankenbereichs (70) kleiner als der größte Druchmesser (D₂) am stimseitigen Ende des Innenkonus (28) des Anschlußstutzens (4) ist.

7. Rohrverschraubung nach Anspruch 3 oder 6,
**dadurch gekennzeichnet, daß** der Konuswinkel (β) des Nutgrundes (50;66) etwa 10° bis 15°, insbesondere etwa 12°, beträgt.

8. Rohrverschraubung nach einem der Ansprüche 1 bis 7,
**dadurch gekennzeichnet, daß** die Umfangsdichtung (44) durch einen Profilring (52; 54; 60; 74) aus einem elastomeren Material, insbesondere aus NBR und/oder PTFE, gebildet ist.

9. Rohrverschraubung nach Anspruch 8,
**dadurch gekennzeichnet, daß** der Profilring (52) einen im wesentlichen rechteckigen Ringquerschnitt aufweist.

10. Rohrverschraubung nach Anspruch 8,
**dadurch gekennzeichnet, daß** der Profilring (54) einen im wesentlichen dreieckigen Ringquerschnitt mit einer etwa radial nach außen ragenden Dichtkante (56) aufweist.

11. Rohrverschraubung nach Anspruch 8,
**dadurch gekennzeichnet, daß** der Profilring (60) einen im wesentlichen L-förmigen Ringquerschnitt mit einem axialen, insbesondere dem Außenkonus (30) zugekehrten Ringabschnitt (62) und einem radialen Ringabschnitt (64) aufweist, wobei nach der Montage der radiale Ringabschnitt (64) vorzugsweise zwischen der Anschlagfläche (38) des Schneidrings (18) und der Stimfläche (40) des Anschlußstutzens (4) angeordnet ist.

12. Rohrverschraubung nach Anspruch 11,
**dadurch gekennzeichnet, daß** der Profilring (60)aufderdem Anschlußstutzen (4) zugekehrten Seite des radialen Ringabschnittes (64) mindestens eine ringstegartige, konzentrisch umlaufende Anlagerippe (90), vorzugsweise mindestens zwei konzentrisch umlaufende, über radial dazwischenliegende, axiale, nutartige Ringvertiefungen (92) beabstandete Anlagerippen (90) aufweist.

13. Rohrverschraubung nach einem der Ansprüche 1 bis 12,
**gekennzeichnet durch** einen zusätzlichen elastischen Dichtring (76) zur radial inneren Abdichtung zwischen dem Schneidring (18) und der Rohrleitung (10).

14. Rohrverschraubung nach Anspruch 13,
**dadurch gekennzeichnet, daß** der zusätzliche Dichtring (76) in einer inneren Ringnut (78) des Schneidrings (18) angeordnet ist.

15. Rohrverschraubung nach einem der Ansprüche 1 bis 14,
**dadurch gekennzeichnet, daß** die Anschlagfläche (38) des Schneidrings (18) derart geringfügig radial nach außen und axial in Richtung der Stirnfläche (40) des Anschlußstutzens (4) geneigt verläuft, daß beim Anziehen der Überwurfmutter (6) eine Verformung des Schneidrings (18) zwecks radial nach innen gerichteter Verpresssung gegen die Rohrleitung (10) erfolgt, und zwar insbesondere im Bereich des zusätzlichen Dichtrings (76).

## Claims

1. Screwed pipe connection (1) for connecting an, in particular metallic, pipeline (10), comprising a connection piece (4) having a location opening (8) for the pipeline (10), a cap nut (6) which can be screwed to the connection piece (4), and a metallic cutting ring (18) arranged between the connection piece (4) and the cap nut (6), the cutting ring (18), by means of an outer cone (30), interacting with an inner cone (28) of the connection piece (4) in such a way that it is deformed radially inwards in a certain region when the cap nut (6) is tightened and cuts with a notch effect into the material of the pipeline (10) in a positive-locking manner by means of at least one cutting edge (32), and the cutting ring (18), following the outer cone (30), having an essentially radial stop surface (38) for bearing against an end face (40) of the connection piece (4) in such a way as to limit the tightening, and an elastomeric circumferential seal (44) for bearing in the inner cone (28) of the connection piece (4) being arranged in an annular groove (46) in the region of the outer cone (30) of the cutting ring (18), **characterized in that** the elastomeric circumferential seal (44) is arranged in the transition region between the outer cone (30) and the stop surface (38) of the cutting ring (18), for which purpose the annular groove (46) accommodating the circumferential seal (44) is formed between the outer cone (30) and the stop surface (38) and merges directly into the stop surface (38), so that, in the assembled position, the circumferential seal (44) is arranged under elastic prestress between the cutting ring (18), on the one hand, and at least one section, directly adjoining the end face (40), of the inner cone (28) of the connection piece (4), on the other hand.

2. Screwed pipe connection according to Claim 1, **characterized in that** the annular groove (46) has a groove root (58) which is designed to be essentially cylindrical in axial section and has a diameter (D₁) which is smaller than the largest diameter (D₂) at the front end of the inner cone (28) of the connection piece (4).

3. Screwed pipe connection according to Claim 1, **characterized in that** the annular groove (46) has a groove root (50) which is designed to be conical in axial section with a certain cone angle (B) and - in particular on its side axially facing the outer cone (30) - has a minimum diameter (D₁) which is smaller than the largest diameter (D₂) at the front end of the inner cone (28) of the connection piece (4).

4. Screwed pipe connection according to Claim 1, **characterized in that** the annular groove (44) has a groove root (66) which - as viewed in axial section - is convexly arched in an approximately central region (68) and is preferably concavely arched in both flank regions (70).

5. Screwed pipe connection according to Claim 4, **characterized in that** the two concavely arched flank regions (70) of the annular groove (46) define an imaginary, cylindrical circumferential plane which has a diameter (D₁) which is smaller than the largest diameter (D₂) at the front end of the inner cone (28) of the connection piece (4).

6. Screwed pipe connection according to Claim 4, **characterized in that** the two concavely arched flank regions (70) of the annular groove (46) define an imaginary circumferential plane (72) which is designed to be conical in axial section with a certain cone angle (B), the smaller diameter in particular of the concave flank region (70) axially nearest to the outer cone (30) being smaller than the largest diameter (D₂) at the front end of the inner cone (28) of the connection piece (4).

7. Screwed pipe connection according to Claim 3 or 6, **characterized in that** the cone angle (B) of the groove root (50; 66) is about 10° to 15°, in particular about 12°.

8. Screwed pipe connection according to one of Claims 1 to 7, **characterized in that** the circumferential seal (44) is formed by a profiled ring (52; 54; 60; 74) made of an elastomeric material, in particular NBR and/or PTFE.

9. Screwed pipe connection according to Claim 8, **characterized in that** the profiled ring (52) has an essentially rectangular ring cross section.

10. Screwed pipe connection according to Claim 8, **characterized in that** the profiled ring (54) has an essentially triangular ring cross section with a sealing edge (56) projecting roughly radially outwards.

11. Screwed pipe connection according to Claim 8, **characterized in that** the profiled ring (60) has an essentially L-shaped ring cross section with an axial ring section (62), in particular facing the outer cone (30), and a radial ring section (64), the radial ring section (64), after assembly, preferably being arranged between the stop surface (38) of the cutting ring (18) and the end face (40) of the connection piece (4).

12. Screwed pipe connection according to Claim 11, **characterized in that** the profiled ring (60), on that side of the radial ring section (64) which faces the connection piece (4), has at least one annular-web-like, concentrically encircling bearing rib (90), preferably at least two concentrically encircling bearing ribs (90) spaced apart via axial, groove-like annular recesses (92) lying radially in between,

13. Screwed pipe connection according to one of Claims 1 to 12, **characterized by** an additional elastic sealing ring (76) for the radial inner sealing between the cutting ring (18) and the pipeline (10).

14. Screwed pipe connection according to Claim 13, **characterized in that** the additional sealing ring (76) is arranged in an inner annular groove (78) of the cutting ring (18).

15. Screwed pipe connection according to one of Claims 1 to 14, **characterized in that** the stop surface (38) of the cutting ring (18) runs so as to be inclined slightly radially outwards and axially in the direction of the end face (40) of the connection piece (4) in such a way that, when the cap nut (6) is tightened, the cutting ring (18) is deformed for the purpose of pressing radially inwards against the pipeline (10), to be precise in particular in the region of the additional sealing ring (76).

## Revendications

1. Raccord vissé (1) pour raccorder une conduite (10), en particulier métallique, avec un embout présentant une ouverture (8) pour la conduite (10), avec un écrou-raccord (6) pouvant être vissé avec l'embout (4) ainsi qu'avec une bague coupante (18) métallique placée entre l'embout (4) et l'écrou-raccord (6), la bague coupante (18) avec un cône extérieur (30) interagissant avec un cône intérieur (28) de l'embout (4) de telle façon qu'elle se déforme vers l'intérieur de manière radiale dans certaines zones lorsqu'on serre l'écrou-raccord (6) et pénètre par concordance de forme dans le matériau de la tuyauterie (10) avec au moins une arête coupante (32) sous l'action du cisaillement et la bague coupante (18) présentant, au niveau du raccordement avec le cône extérieur (30) une surface d'arrêt (38) essentiellement radiale qui vient plaquer, pour limiter le serrage, contre une face frontale (40) de l'embout (4) et un joint périphérique élastomère (44) étant placé dans une rainure annulaire (46) au niveau du cône extérieur (30) de la bague coupante (18) pour plaquer dans le cône intérieur (28) de l'embout (4),
**caractérisé en ce que** le joint périphérique élastomère (44) est placé dans la zone intermédiaire entre le cône extérieur (30) et la surface d'arrêt (38) de la bague coupante (18), ce pourquoi la gorge annulaire (46) recevant le joint périphérique (44) est située entre le côté extérieur (30) et la surface d'arrêt (38) et débouche directement sur la surface d'arrêt (38) de sorte qu'en l'état monté, le joint périphérique (44) est placé sous précontrainte élastique entre la bague coupante (18) d'une part et au moins une partie du cône intérieur (28) de l'embout (4) directement raccordée à la face frontale (40) d'autre part.

2. Raccord vissé selon revendication 1,
**caractérisé en ce que** la gorge annulaire (46) présente un fond de gorge (58) de forme essentiellement conique en coupe axiale et un diamètre (D₁) inférieur au plus grand diamètre (D₂) sur l'extrémité, côté frontal, du cône intérieur (28) de l'embout (4).

3. Raccord vissé selon revendication 1,
**caractérisé en ce que** la gorge annulaire (46) présente un fond de gorge (50) configuré, en coupe axiale, avec un angle conique (β) donné et - en particulier sur le côté tourné axialement vers le cône extérieur (30) - présente un diamètre minimal (D₁) plus petit que le plus grand diamètre (D₂) sur l'extrémité, coté frontal, du cône intérieur (28) de l'embout (4).

4. Raccord vissé selon revendication 1,
**caractérisé en ce que** la gorge annulaire (44) présente un fond de gorge (66) qui - vu en coupe axiale - est convexe dans une zone approximativement centrale (68) et, de préférence, concave sur les deux flancs (70).

5. Raccord vissé selon revendication 4,
**caractérisé en ce que** les deux flancs (70) concaves de la gorge annulaire (46) définissent un niveau périphérique cylindrique fictif présentant un diamètre (D₁) plus petit que le plus grand diamètre (D₂) à l'extrémité, côté frontal, du cône intérieur (28) de l'embout (4).

6. Raccord vissé selon revendication 4,
**caractérisé en ce que** les deux flancs (70) concaves de la gorge annulaire (46) définissent un niveau périphérique fictif (72) ayant un angle conique (β) donné en coupe axiale, le plus petit diamètre, en particulier du flanc concave (70) axialement le plus proche du cône extérieur (30) étant inférieur au plus grand diamètre (D₂) sur l'extrémité, coté frontal, du cône intérieur (28) de l'embout (4).

7. Raccord vissé selon revendications 3 ou 6,
**caractérisé en ce que** l'angle conique (β) du fond de gorge (50;66) est approximativement égal à 10 à 15°, en particulier approximativement égal à 12°.

8. Raccord vissé selon l'une des revendications 1 à 7,
**caractérisé en ce que** le joint périphérique (44) est formé par une bague profilée (52; 54; 60; 74) constituée d'un matériau élastomère, en particulier de NBR et/ou de PTFE.

9. Raccord vissé selon revendication 8,
**caractérisé en ce que** la bague profilée (52) présente une section essentiellement rectangulaire.

10. Raccord vissé selon revendication 8,
**caractérisé en ce que** la bague profilée (54) présente une section essentiellement triangulaire avec une arête d'étanchéité dépassant vers l'extérieur de façon approximativement radiale.

11. Raccord vissé selon revendication 8,
**caractérisé en ce que** la bague profilée (60) présente une section essentiellement en forme de L avec un tronçon (62) axial tourné en particulier vers le cône extérieur (30) et un tronçon (64) radial, le tronçon radial (64) étant placé après le montage de préférence entre la surface d'arrêt (38) de la bague coupante (18) et la face frontale (40) de l'embout (4).

12. Raccord vissé selon revendication 11,
**caractérisé en ce que** la bague profilée (60) présente, sur le côté du tronçon radial (64) tourné vers l'embout (4) au moins une nervure (90), en forme de cloison de gorge, faisant le tour de façon concentrique, de préférence au moins deux nervures (90) faisant le tour de façon concentrique séparées par des creux axiaux (92) en forme de gorge situés radialement entre.

13. Raccord vissé selon l'une des revendications 1 à 12,
**caractérisé par** une bague d'étanchéité (76) élastique supplémentaire destinée à l'étanchéité radialement interne entre la bague coupante (18) et la tuyauterie (10).

14. Raccord vissé selon revendication 13,
**caractérisé en ce que** la bague d'étanchéité supplémentaire (76) est placée dans une gorge interne (78) de la bague coupante (18).

15. Raccord vissé selon l'une des revendications 1 à 14,
**caractérisé en ce que** la surface d'arrêt (38) de la bague coupante (18) est légèrement inclinée vers l'extérieur de façon radiale et en direction de la face frontale (40) de l'embout (4) de façon axiale, **en ce que**, lors du serrage de l'écrou-raccord (6), la bague coupante (18) se déforme afin d'assurer une compression contre la tuyauterie (10) vers l'intérieur de façon radiale et ce, en particulier, dans la zone de la bague d'étanchéité supplémentaire (76).
